Europäisches Patentamt

European Patent Office

Office européen des brevets

(11) Veröffentlichungsnummer: **0 087 157**

**A2**

(12) # EUROPÄISCHE PATENTANMELDUNG

(21) Anmeldenummer: 83101665.4

(22) Anmeldetag: 21.02.83

(51) Int. Cl.³: **G 01 L 7/20**
**G 01 L 7/12**

(30) Priorität: 24.02.82 DE 3206667

(43) Veröffentlichungstag der Anmeldung:
31.08.83 Patentblatt 83/35

(84) Benannte Vertragsstaaten:
CH FR GB IT LI

(71) Anmelder: Dostmann GmbH & Co. KG

D-6980 Wertheim(DE)

(72) Erfinder: Marterer, Karl
Teilbacher Mühle 5
D-6880 Wertheim-Waldenhausen(DE)

(74) Vertreter: Grams, Klaus Dieter, Dipl.-Ing. et al,
Patentanwaltsbüro Tiedtke-Bühling-Kinne-
Grupe-Pellmann-Grams Bavariaring 4
D-8000 München 2(DE)

(54) Druckmessgerät, insbesondere Barometer.

(57) Ein Druckmeßgerät, insbesondere Barometer, mit einer vollständig oder teilweise evakuierten, geschlossenen Membrankapsel und einer Anzeigeeinrichtung zur Umwandlung des druckbedingten Verformungszustands der Membrankapsel in eine Anzeige, zeichnet sich dadurch aus, daß die Anzeigeeinrichtung eine von einem Kammergehäuse umschlossene, flüssigkeitsgefüllte Kammer, in der die Membrankapsel angeordnet ist, und ein enges Rohr umfaßt, das an die flüssigkeitsgefüllte Kammer angeschlossen und teilweise mit einer Flüssigkeit gefüllt ist, deren Meniskus im Rohr dem zu messenden Druck ausgesetzt ist.

Fig 1

EP 0 087 157 A2

Croydon Printing Company Ltd

TIEDTKE - BÜHLING - KINNE - GRUPE
PELLMANN - GRAMS - STRUIF

**0087157**

Patentanwälte und
Vertreter beim EPA
Dip.-Ing. H. Tiedtke
Dipl.-Chem. G. Bühling
Dipl.-Ing. R. Kinne
Dipl.-Ing. P. Grupe
Dipl.-Ing. B. Pellmann
Dipl.-Ing. K. Grams
Dipl.-Chem. Dr. B. Struif

**Bavariaring 4, Postfach 20 24 03**
**8000 München 2**
Tel.: 0 89 - 53 96 53
Telex: 5-24 845 tipat
Telecopier: 0 89 - 537377
cable: Germaniapatent München

21. Februar 1983
EP 2782

Dostmann GmbH & Co. KG
Wertheim, Bundesrepublik Deutschland

Druckmeßgerät, insbesondere Barometer

Die Erfindung bezieht sich auf ein Druckmeßgerät, insbesondere auf ein Barometer, gemäß dem Oberbegriff von
Patentanspruch 1.

Druckmeßgeräte mit einer ganz oder teilweise evakuierten
Membrankapsel sind bekannt. Wenn sie zur Messung des
Umgebungsdrucks dienen, werden sie üblicherweise als
Aneroidbarometer bezeichnet, und wenn sie zur Messung
von nicht mit dem Umgebungsdruck übereinstimmenden
Drücken dienen, werden sie üblicherweise als Kapselmanometer bezeichnet. Bei den bekannten Druckmeßgeräten dieser Art besteht die Anzeigeeinrichtung aus einem Zeigerwerk, zu dem ein drehbarer Zeiger gehört, und einem
Übertragungsmechanismus, der die Membrankapsel mit dem
Zeigerwerk derart verbindet, daß eine durch eine Druckänderung verursachte Verformung der Membrankapsel zum

Dresdner Bank (München) Kto 3939 844        Bayer. Vereinsbank (München) Kto

Zeigerwerk übertragen wird und eine Änderung der Zeigerstellung bewirkt. Diese herkömmliche Anzeigeeinrichtung
erfordert erhebliche Herstellungs- und Montageaufwand.

Der Erfindung liegt die Aufgabe zugrunde, das gattungsgemäße Druckmeßgerät derart auszubilden, daß seine Anzeigeeinrichtung möglichst geringen Herstellungs- und
Montageaufwand erfordert.

Diese Aufgabe wird erfindungsgemäß dadurch gelöst, daß
die Anzeigeeinrichtung eine von einem Kammergehäuse umschlossene, flüssigkeitsgefüllte Kammer, in der die
Membrankapsel angeordnet ist, und ein enges Rohr umfaßt, das an die flüssigkeitsgefüllte Kammer angeschlossen und teilweise mit einer Flüssigkeit gefüllt ist,
deren Meniskus im Rohr dem zu messenden Druck ausgesetzt
ist.

Bei dem erfindungsgemäßen Druckmeßgerät wird der zu
messende Druck von der Flüssigkeit im engen Rohr zur
flüssigkeitsgefüllten Kammer übertragen, so daß der zu
messende Druck auch in der flüssigkeitsgefüllten Kammer
herrscht und von außen auf die Membrankapsel wirkt, so
daß der Verformungszustand der Membrankapsel dem zu messenden Druck entspricht. Je nach ihrem Verformungszustand
nimmt die Membrankapsel ein unterschiedliches Volumen
ein. Demzufolge hängt das in der flüssigkeitsgefüllten
Kammer für die Flüssigkeit zur Verfügung stehende Volumen
vom Verformungszustand der Membrankapsel ab. Bei einer
Druckzunahme wird die Membrankapsel stärker zusammengedrückt, so daß in die flüssigkeitsgefüllte Kammer Flüssigkeit einströmt und dementsprechend der Meniskus im Rohr
verlagert wird. Bei einer Druckabnahme dehnt sich die
Membrankapsel aus, so daß Flüssigkeit aus der flüssigkeitsgefüllten Kammer verdrängt wird und dementsprechend der Meniskus im Rohr in einer zum vorstehend erläuterten Fall entgegengesetzten Richtung verlagert wird. Die Lage des Meniskus im Rohr ist somit ein Maß für den angelegten Druck und kann beispielsweise an einer Skala am oder neben dem Rohr abgelesen werden.

In Anbetracht der vorstehend beschriebenen Wirkungsweise. des erfindungsgemäßen Druckmeßgerätes versteht es sich, daß es bei diesem nicht auf das Gewicht einer Flüssigkeitssäule ankommt, wie dies etwa bei einem Quecksilberbarometer der Fall ist. Zwar dient der Meniskus der Flüssigkeit im Rohr zur Anzeige des gemessenen Drucks; kein Maß für den gemessenen Druck ist dagegen die Höhe des Meniskus beispielsweise über der flüssigkeitsgefüllten Kammer. Der Meniskus kann sich bei dem erfindungsgemäßen Druckmeßgerät sowohl oberhalb der flüssigkeitsgefüllten Kammer, als auch in etwa auf gleicher Höhe wie diese, als auch unterhalb derselben befinden. Die Länge der Flüssigkeitssäule im Rohr wirkt sich lediglich dahingehend aus, daß der Druck in der flüssigkeitsgefüllten Kammer entsprechend dieser Länge größer oder kleiner als der zu messende Druck ist. Diese Druckdifferenz ist jedoch beispielsweise bei  Verwendung des erfindungsgemäßen Druckmeßgerätes als Barometer vernachlässigbar und kann im übrigen bei der Eichung des Druckmeßgerätes berücksichtigt werden.

Beim erfindungsgemäßen Druckmeßgerät ist das Rohr teilweise mit einer Flüssigkeit gefüllt, die im Rohr einen Meniskus bildet. Dies schließt jedoch nicht aus, daß sich im Anschluß an den Meniskus eine weitere Flüssigkeit im Rohr befindet, so daß der Meniskus die nachweisbare Grenzfläche zwischen zwei Flüssigkeiten bildet.

Da es für das erfindungsgemäße Druckmeßgerät wesentlich ist, daß die Membrankapsel aus der flüssigkeitsgefüllten Kammer je nach dem anliegenden Druck mehr oder weniger Flüssigkeit verdrängt, muß das Kammergehäuse ausreichend formbeständig sein, damit es nicht durch eine Formänderung die von der Membrankapsel bewirkte Verdrängung kompensiert oder unkontrolliert überlagert. Trotz dieser Forderung nach Formbeständigkeit braucht das Kammergehäuse aber nicht in jedem Fall hohe Festigkeit und Steifigkeit zu haben, weil beispielsweise bei Verwendung des erfindungsgemäßen Druckmeßgerätes als Barometer in der flüssigkeitsgefüllten Kammer und außerhalb derselben praktisch gleiche Drücke herrschen, so daß das Kammergehäuse nicht durch eine Druckdifferenz zwischen innen und außen belastet ist.

Obwohl im Zusammenhang mit der Erfindung auch eine nicht stabilisierte Membrankapsel anwendbar ist, kommt vorzugsweise eine stabilisierte Membrankapsel zur Anwendung. Obwohl vorzugsweise vorgesehen ist, daß das Rohr und die Kammer in Strömungsverbindung miteinander stehen und dieselbe Flüssigkeit enthalten, ist es auch möglich, in der Kammer und im Rohr unterschiedliche Flüssigkeiten zu verwenden und zwischen der Kammer und dem Rohr einen Druck- und Mengenmittler vorzusehen.

In vorteilhafter Ausbildung der Erfindung kann ferner vorgesehen sein, daß die Innenseiten der die flüssigkeitsgefüllte Kammer begrenzenden Wände des Kammergehäuses der Form der jeweils zugewandten Seite der Membrankapsel angepaßt sind und in geringem Abstand von dieser Seite angeordnet sind. Dadurch ist dafür gesorgt, daß sich in der flüssigkeitsgefüllten Kammer nur eine geringe Flüssigkeitsmenge befindet, was den Vorteil hat, daß der Anzeigefehler durch temperaturbedingte Volumenänderungen der Flüssigkeit in der Kammer gering ist. Der flüssigkeitsgefüllte Zwischenraum zwischen der Membrankapsel und den Innenseiten des Kammergehäuses soll dabei
allerdings noch so groß sein, daß sich die Membrankapsel
unbehindert ausdehnen kann, sofern die Drücke im gewünschten Meßbereich liegen.

Weitere vorteilhafte Ausgestaltungen der Erfindung sind
in den Unteransprüchen gekennzeichnet.

Ausführungsbeispiele der Erfindung sind in den Zeichnungen dargestellt und werden im folgenden näher erläutert. Bei diesen Ausführungsbeispielen handelt es
sich um Barometer, die den bevorzugten Anwendungsfall
der Erfindung darstellen. Es zeigen:

Fig. 1 einen senkrechten Längsschnitt durch ein
erstes Ausführungsbeispiel der Erfindung;

Fig. 2 eine Schnittdarstellung gemäß A-B in Figur 1;

Fig. 3 einen senkrechten Längsschnitt durch eine
zweite Ausführungsform der Erfindung; und

Fig. 4 eine Ansicht, teilweise im Schnitt, einer
dritten Ausführungsform der Erfindung.

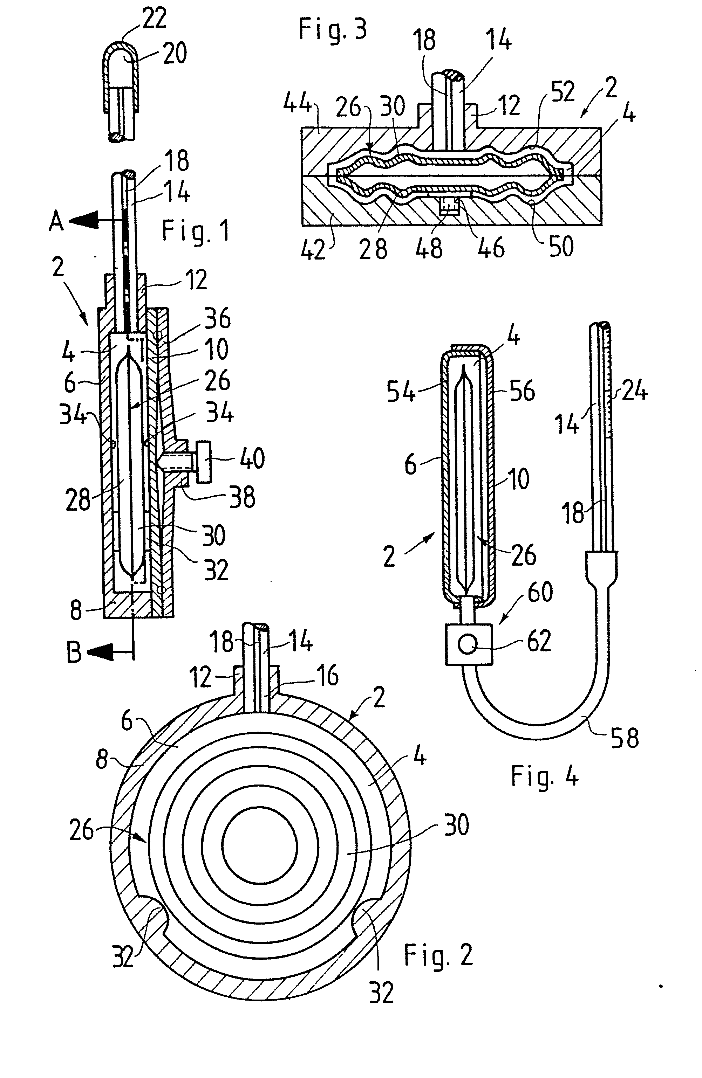

Die in den Figuren 1 und 2 dargestellte erste Ausführungsform zeigt ein Barometer, d.h. ein Druckmeßgerät
zur Messung des umgebenden Luftdrucks. Das dargestellte
Barometer weist ein Kammergehäuse 2 auf, das eine flache,
scheiben- bzw. zylinderförmige Kammer 4 umschließt. Das
Kammergehäuse 2 besteht aus einer in Figur 1 linken, im
wesentlichen ebenen Wand 6, einer ringförmigen Wand 8,
die einstückig mit der Wand 6 ausgebildet ist, sowie einer
in Figur 1 rechten, im wesentlichen ebenen Wand 10, die mit der ringförmigen Wand 8 flüssigkeitsdicht verklebt oder verschweißt ist. Oben in den Figuren 1 und 2 ist an die ringförmige Wand 8 ein zylindrischer Ansatz 12 angeformt, durch den mittig eine Bohrung verläuft, in die flüssigkeitsdicht ein gerades Rohr 14 mit seinem unteren Ende 16 eingesetzt ist. Die sich über die gesamte Länge des Rohres 14 erstreckende Innenbohrung ist einerseits zur Kammer 4 und andererseits zu einer zweiten Kammer 20 am oberen Ende des Rohres 14 offen. Die zweite Kammer 20 wird außer vom Rohr 14 von einer Kappe 22 aus einem nachgiebigen Material umschlossen, wobei die zweite Kammer 20 so groß ist und die Kappe 22 so nachgiebig ist, daß in der Kammer 20 der gleiche Druck wie außerhalb der Kappe 22 herrscht, so daß diese zwar das Eindringen von Staub und das Durchdringen von Flüssigkeit verhindert, nicht jedoch die Druckübertragung von der Umgebung bis in die Kammer 4 behindert.

Das Rohr 14 ist mit einer in den Figuren 1 und 2 nicht dargestellten, jedoch in Figur 4 angedeuteten Skala 24 versehen.

In der Kammer 4 ist eine Membrankapsel 26 angeordnet. Die Membrankapsel 26 besteht aus einer in Figur 1 linken Membran 28 sowie einer in Figur 1 rechten Membran 30, wobei die beiden Membranen 28 und 30 an ihren Rändern gasdicht miteinander verbunden und zu ihrer Mitte symmetrisch gewellt sind. Die Membrankapsel 26 ist evakuiert und derart vorgespannt, daß sie trotz des in ihr herrschenden Vakuums nicht zusammenfällt. Die Abmessungen der Kammer 4 und der Membrankapsel 26 sind derart aufeinander abgestimmt, daß sowohl rings um den Rand der Membrankapsel 26 als auch auf deren beiden Seiten ein gewisser Abstand zu den Innenseiten der Wände 6, 8 und 10 des Kammergehäuses 2 besteht. Die Membrankapsel 26 ist in der Kammer 4 frei schwimmend angeordnet, d.h. nicht fest mit dem Kammergehäuse 2 verbunden. Zur Abstützung der Membrankapsel 26 innerhalb der Kammer 4 stehen in die Kammer Vorsprünge 32 und 34 vor, die dafür sorgen, daß die Membrankapsel 26 allenfalls in Punktberührung mit den Innenseiten der Wände des Kammergehäuses treten kann, damit die Membrankapsel 26 nicht durch flächige Anlage an den Innenseiten an einer Verformung gehindert wird. Die Vorsprünge 32 sind an der Innenseite der ringförmigen Wand 8 ausgebildet, und die Vorsprünge 34 sind an den Innenseiten der Wände 6 und 10 so ausgebildet, daß sie die Ausdehnung der Membrankapsel nicht behindern.

Die Kammer 4 ist mit einer geeigneten Flüssigkeit gefüllt, wobei für diese Flüssigkeit in der Kammer 4 allerdings nur der von der Membrankapsel 26 freigelassene Raum zur Verfügung steht. Mit derselben Flüssigkeit ist auch die Innenbohrung 18 des Rohres 14 bis zu einer gewissen Höhe gefüllt, wo sie einen nicht dargestellten Meniskus bildet. Oberhalb dieses Meniskus ist die Innenbohrung 18 ebenso wie die Kammer 20 mit Luft gefüllt.

Auf der Außenseite der kreisförmigen Wand 10 ist eine ebenfalls kreisförmige Scheibe 36 angeordnet, die entlang ihrem Rand mit der Wand 10 beispielsweise durch Kleben oder Schweißen fest verbunden ist. Radial innerhalb des verschweißten bzw. verklebten Bereichs sind die Wand 10 und die Scheibe 36 nicht miteinander verbunden. Mittig an der Scheibe 36 ist ein Vorsprung 38 angeformt, in dem ein Gewindeloch ausgebildet ist, in das ein Element 40 in Form einer Stellschraube geschraubt ist. Das Element 40 stützt sich mit seinem in Figur 1 linken Ende an der Mitte der Wand 10 ab, so daß die Wand 10, die aus einem ausreichend elastischen Material, beispielsweise einem Kunststoff, besteht, durch Anziehen oder Lösen des Elementes 40 mehr oder weniger weit nach links (in Figur 1) ausgelenkt wird und dadurch das Volumen der flüssigkeitsgefüllten Kammer 4 verändert. Die vorstehend beschriebene Ausbildung ermöglicht es somit, das Volumen der flüssigkeitsgefüllten Kammer 4 mit Hilfe des Elementes 40 innerhalb gewisser Grenzen einzustellen.

Der zu messende Druck, d.h. im vorliegenden Fall der Luftdruck der Umgebung, wird durch die Kappe 22 in die Kammer 20 und zum nicht dargestellten Meniskus der Flüssigkeit innerhalb des Rohres 14 übertragen. Aufgrund der ungehinderten Verbindung zwischen der Innenbohrung 18 und der Kammer 4 gelangt dieser Druck in die Kammer 4, so daß der Innendruck in der Kammer 4 gleich dem Luftdruck zuzüglich des der Höhe der Flüssigkeitssäule im Rohr 14 entsprechenden Drucks ist. Dem Innendruck in der Kammer 4 ist die Membrankapsel 26 ausgesetzt, so daß sie einen dem Innendruck entsprechenden Verformungszustand einnimmt. Wenn von diesem Zustand ausgehend der Luftdruck steigt, wird die Membrankapsel 26 stärker zusammengedrückt, so daß aus dem Rohr 14 Flüssigkeit in die Kammer 4 nachströmt und dementsprechend der Meniskus im Rohr sinkt. Bei sinkendem Luftdruck dehnt sich die Membrankapsel 26 entsprechend aus, so daß sie Flüssigkeit aus der Kammer 4 verdrängt und der Meniskus im Rohr 14 entsprechend steigt. An der in den Figuren 1 und 2 nicht dargestellten Skala kann dann der durch den Meniskus angezeigte Luftdruck abgelesen werden. Durch Verändern des Volumens der Kammer 4 mittels des Elementes 40 kann der Meniskus bei einem gegebenen Eichdruck auf den diesem Eichdruck zugeordneten Skalenwert eingestellt werden. Diese Einstellmöglichkeit ist dann entbehrlich, wenn die Skala verstellbar ist oder wenn die in das Barometer gefüllte Flüssigkeitsmenge genau dosiert ist.

Selbst wenn die Wände des Kammergehäuses 2, insbesondere die Wände 6 und 10, eine gewisse Elastizität haben, werden sie bei Änderungen des umgebenden Luftdrucks nicht ausgelenkt, weil diese Luftdruckänderungen nicht nur auf der Außenseite des Kammergehäuses 2, sondern auch in der Kammer 4 und somit auf den Innenseiten der Wände des Kammergehäuses wirken.

Wenn allerdings das anhand der Figuren 1 und 2 beschriebene Druckmeßgerät nicht als Barometer benutzt wird, sondern einen vom umgebenden Luftdruck abweichenden Druck messen soll, wird das Kammergehäuse 2 so steif ausgebildet, daß es die zwischen dem Innendruck in der Kammer 4 und dem umgebenden Luftdruck auftretenden Druckdifferenzen ohne wesentliche Verformung aufnehmen kann.

Wenn das anhand der Figuren 1 und 2 beschriebene Barometer in der dargestellten Lage benutzt wird, sinkt der Meniskus im Rohr 14 bei steigendem Luftdruck. Wenn dies nicht gewünscht ist, d.h. wenn der Meniskus bei steigendem Luftdruck steigen soll, kann das in den Figuren 1 und 2 dargestellte Barometer umgekehrt ausgerichtet benutzt werden, d.h. in einer solchen Benutzungslage, daß sich das Kammergehäuse 2 oben und die Kappe 22 unten befindet. Beispielsweise bei steigendem Luftdruck bewegt sich der Meniskus in Richtung zum Kammergehäuse 2, was bei der letztgenannten Benutzungslage bedeuten würde, daß er sich nach oben bewegt. Zusätzlich kann in diesem Fall vorgesehen sein, daß die Kammer 20 und der sich unmittelbar an diese anschließende Abschnitt der Innenbohrung 18 bis zum Meniskus mit einer Flüssigkeit gefüllt ist, die farblich mit der Flüssigkeit in der Kammer 4 kontrastiert und vorzugsweise stärker auffällt, so daß dann bei steigendem Luftdruck die Flüssigkeitssäule aus der auffallenderen Flüssigkeit nach oben wächst.

Das Ausführungsbeispiel gemäß Figur 3 stellt eine Abwandlung des Ausführungsbeispiels gemäß den Figuren 1 und 2 dar. In Figur 3 sind gleiche Bezugszeichen für gleiche bzw. entsprechende Teile wie in den Figuren 1 und 2 benutzt.

Bei dem Ausführungsbeispiel gemäß Figur 3 verläuft die Hauptebene des Kammergehäuses 2 und der Membrankapsel 26 senkrecht zur Längsachse des Rohres 14. Das Kammergehäuse 2 ist in der Hauptebene geteilt und besteht im wesentlichen aus zwei zueinander symmetrischen Wänden 42 und 44. In der Mitte der in Figur 3 oberen Wand 44 ist der Ansatz 12 angeformt, in den das Rohr 14 flüssigkeitsdicht eingesetzt ist. Mittig in der in Figur 3 unteren Wand 42 ist ein Gewindeloch 46 ausgebildet, in das ein Gewindebolzen 48 geschraubt ist, der mittig an der Membran 28 der Membrankapsel 26 befestigt ist. Die Menbrankapsel 26 ist somit an einer Stelle, nämlich dem Ort des Gewindebolzens 48, fest mit dem Kammergehäuse 2 verbunden. Die Wände 42 und 44 weisen jeweils eine Innenseite 50 bzw. 52 auf. Diese Innenseiten 50 und 52 begrenzen die Kammer 4 und sind jeweils komplementär zu den Außenseiten der beiden Membranen 28 und 30 geformt, wobei die Innenseiten 50 und 52 in geringem Abstand von den Außenseiten der Membranen 28 und 30 verlaufen. Dieser Abstand ist jedoch noch so groß, daß es auch beim niedrigsten Druck innerhalb des zu erfassenden Meßbereichs nicht zu einer Berührung zwischen den Membranen 28 und 30 und der jeweils zugewandten Innenseite 50 bzw. 52 kommt. Durch die vorstehend beschriebene Ausbildung ist gewährleistet, daß sich einerseits die Membrankapsel 26 in der Kammer 4 unbehindert verformen kann, während andererseits das in der Kammer 4 enthaltene Flüssigkeitsvolumen sehr klein ist, so daß temperaturbedingte Volumenänderungen der Flüssigkeit allenfalls eine sehr geringe Verlagerung des Meniskus hervorrufen können. Bei der in Figur 3 gezeigten Ausbildung und jeder anderen Ausbildung, bei der die Innenseiten der die flüssigkeitsgefüllte Kammer begrenzenden Wände zu den Seiten der Membrankapsel einen nur geringen Abstand haben, ist es zweckmäßig, die Membrankapsel am Kammergehäuse zu fixieren, wie dies beim Ausführungsbeispiel gemäß Figur 3 mit Hilfe des Gewindebolzens 48 realisiert ist.

Bei dem Ausführungsbeispiel gemäß Figur 4 sind wiederum gleiche Bezugszeichen wie in den Figuren 1 bis 3 für gleiche bzw. entsprechende Teile benutzt.

Die Membrankapsel 26 ist frei schwimmend im Kammergehäuse 2 angeordnet, das lediglich aus zwei dünnwandigen, kreisförmigen Schalen 54 und 56 besteht, deren einander zugewandte Ränder aufeinander geschoben und miteinander flüssigkeitsdicht verklebt oder verschweißt sind. Die beiden Schalen 54 und 56 können beispielsweise aus Blech tiefgezogen oder aus einer Kunststoffolie gezogen sein. Im Mantel des Kammergehäuses aus den beiden Schalen 54 und 56 ist ein Loch ausgebildet, in das ein Ende eines Schlauches 58 eingesteckt und geklebt ist. Das andere Ende des Schlauches 58 ist mit dem Rohr 14 verbunden, auf dessen freies Ende der umgebende Luftdruck wirkt. An den Schlauch 58 ist eine lediglich schematisch dargestellte Schlauchklemme 60 gesetzt, die eine Klemmschraube 62 aufweist, mit deren Hilfe der Schlauch 58 örtlich mehr oder weniger zusammengedrückt werden kann, so daß dadurch der für Flüssigkeit verfügbare Raum im Schlauch 58 veränderbar ist. Im Betrieb sind die Kammer 4, soweit diese nicht von der Membrankapsel 26 ausgefüllt ist, das Innere des Schlauches 58 und das Rohr 14 bis zu einer gewissen Höhe mit Flüssigkeit gefüllt, wobei die Lage des Meniskus relativ zur Skala 24 mit Hilfe der Schlauchklemme 60 eingestellt werden kann.

Das Ausführungsbeispiel gemäß Figur 4 zeichnet sich einerseits durch die besonders einfache Ausbildung des Kammergehäuses 2 aus.

Außerdem zeichnet sich das Ausführungsbeispiel gemäß Figur 4 dadurch aus, daß die räumliche Zuordnung zwischen dem Rohr 14 und dem Kammergehäuse 2 nicht starr festgelegt ist. Wegen der Verbindung durch den Schlauch 58 kann die relative Einbaulage zwischen dem Rohr 14 und dem Kammergehäuse 2 innerhalb gewisser Grenzen frei gewählt werden. Das Barometer gemäß Figur 4 kann ferner nicht nur in der dargestellten Lage benutzt werden. Vielmehr ist auch jede beliebige andere Ausrichtung des Rohres 14 möglich; beispielsweise kann das Barometer in zur dargestellten Ausrichtung entgegengesetzter Ausrichtung benutzt werden, wobei dann das in Figur 4 untere Ende des Rohres 14 dessen oberes Ende ist.

Der Durchmesser der Innenbohrung 18 im Rohr 14 ist so gewählt, daß sich für den gewünschten Druckmeßbereich eine ausreichende Skalenlänge ergibt, d.h. daß das beim Durchlaufen des Druckmeßbereichs von der Membrankapsel 26 verdrängte Flüssigkeitsvolumen gleich dem Volumen der Innenbohrung 18 über die gewünschte Skalenlänge ist. Dabei soll die Innenbohrung 18 so eng sein, daß die Flüssigkeitssäule im Rohr 14 gegebenenfalls auch bei hängender Säule nicht reißt. Andererseits soll die

Innenbohrung 18 so weit sein, daß die Druckübertragung vom freien Ende des Rohres 14 zur Kammer 4 nicht durch Kapillarkräfte merkbar beeinträchtigt ist.

Bei den dargestellten Ausführungsbeispielen ist das Rohr 14 gerade. Es kann jedoch auch einen gekrümmten Verlauf haben, beispielsweise kreisförmig gebogen sein.

TIEDTKE - BÜHLING - KINNE - GRUPE
PELLMANN - GRAMS - STRUIF

Patentanwälte und
Vertreter beim EPA
Dipl.-Ing. H. Tiedtke
Dipl.-Chem. G. Bühling
Dipl.-Ing. R. Kinne
Dipl.-Ing. P. Grupe
Dipl.-Ing. B. Pellmann
Dipl.-Ing. K. Grams
Dipl.-Chem. Dr. B. Struif

Bavariaring 4, Postfach 20 24 03
8000 München 2
Tel.: 0 89 - 53 96 53
Telex: 5-24 845 tipat
Telecopier: 0 89 - 537377
cable: Germaniapatent München

21. Februar 1983
EP 2782

- 14 -

Patentansprüche

1. Druckmeßgerät, insbesondere Barometer, mit einer vollständig oder teilweise evakuierten, geschlossenen Membrankapsel und einer Anzeigeeinrichtung zur Umwandlung des druckbedingten Verformungszustands der Membrankapsel in eine Anzeige, dadurch gekennzeichnet, daß die Anzeigeeinrichtung eine von einem Kammergehäuse (2) umschlossene, flüssigkeitsgefüllte Kammer (4), in der die Membrankapsel (26) angeordnet ist, und ein enges Rohr (14) umfaßt, das an die flüssigkeitsgefüllte Kammer angeschlossen und teilweise mit einer Flüssigkeit gefüllt ist, deren Meniskus im Rohr dem zu messenden Druck ausgesetzt ist.

2. Druckmeßgerät nach Anspruch 1, dadurch gekennzeichnet, daß das Rohr (14) und die Kammer (4) in Strömungsverbindung miteinander stehen und dieselbe Flüssigkeit enthalten.

3. Druckmeßgerät nach Anspruch 1 oder 2, dadurch gekennzeichnet, daß das Rohr (14) an seinem einen Ende (16) fest mit dem Kammergehäuse (2) verbunden ist.

4. Druckmeßgerät nach Anspruch 1 oder 2, dadurch gekennzeichnet, daß das Rohr (14) und die flüssigkeitsgefüllte Kammer (4) durch einen Schlauch (58) miteinander

Deutsche Bank (München) Kto 51·6·070     Dresdner Bank (München) Klc. 3939 844     Postscheck (München) Kto 670-43-804

VI/4

- 15 -

0087157

verbunden sind.

5. Druckmeßgerät nach Anspruch 4, gekennzeichnet durch eine Schlauchklemme (60) zum Verändern des Flüssigkeitsvolumens im Schlauch (58) durch Zusammendrücken desselben.

6. Druckmeßgerät nach einem der Ansprüche 1 bis 5, dadurch gekennzeichnet, daß das Volumen der flüssigkeitsgefüllten Kammer (4) veränderbar ist.

7. Druckmeßgerät nach Anspruch 6, dadurch gekennzeichnet, daß zumindest eine Wand (10) des Kammergehäuses (2) elastisch verformbar ist und daß gegen diese Wand ein Element (40) drückt, dessen Stellung einstellbar ist.

8. Druckmeßgerät nach einem der Ansprüche 1 bis 7, dadurch gekennzeichnet, daß die Innenseiten (50, 52) der die flüssigkeitsgefüllte Kammer (4) begrenzenden Wände (42, 44) des Kammergehäuses (2) der Form der jeweils zugewandten Seite der Membrankapsel (26) angepaßt sind und in geringem Abstand von dieser Seite angeordnet sind.

9. Druckmeßgerät nach einem der Ansprüche 1 bis 8, dadurch gekennzeichnet, daß die Membrankapsel (26) frei schwimmend in der flüssigkeitsgefüllten Kammer (4) angeordnet ist.

10. Druckmeßgerät nach Anspruch 9, dadurch gekennzeichnet, daß das Kammergehäuse (2) in die Kammer (4) hineinragende Vorsprünge (32, 34) zur Abstützung der Membrankapsel (26) aufweist.

11. Druckmeßgerät nach einem der Ansprüche 1 bis 8, dadurch gekennzeichnet, daß die Membrankapsel (26) auf einer ihrer Seiten mittig einen Gewindebolzen (48) trägt, der mit dem Kammergehäuse (2) verschraubt ist.

12. Druckmeßgerät zum Messen des Umgebungsdrucks nach einem der Ansprüche 1 bis 11, gekennzeichnet durch eine auf das offene Ende des Rohres (14) gesetzte Kappe (22) aus nachgiebigem Material, die auf ihrer Innenseite eine so große Kammer (20) umschließt, daß die Kappe Änderungen des Umgebungsdrucks widerstandslos zu ihrer Innenseite überträgt.

1/1

0087157

Fig. 3

Fig. 1

Fig. 2

Fig. 4